# DEMANDE DE BREVET EUROPEEN

(11) **EP 4 186 354 A1**
(43) Date de publication de la demande: **31.05.2023**
(21) Numéro de dépôt: 22209899.8
(22) Date de dépôt: 28.11.2022
(51) Int. Cl.: A01G 13/10, A01M 1/10, A01M 29/34

(54) **ORGANE DE CROISSANCE ET DE FIXATION DE COLLIER DE PIÈGE À CHENILLES**

(30) Priorité: 29.11.2021 FR 2112631
(71) Demandeur: La Mesange Verte, 66670 Bages (FR)
(72) Inventeur: AURICHE, Christian, 66670 BAGES (FR)
(74) Mandataire: Rhein, Alain

(57) **Abrégé**

L'invention concerne un dispositif d'adaptation de diamètre et de fixation pour un collier de piège à chenilles, notamment pour un piège à chenilles processionnaires du pin, le dispositif d'adaptation et de fixation étant prévu pour coopérer avec un piège à chenilles qui comprend :
- un plancher (1) de cheminement des chenilles, le plancher (1) comprenant deux extrémités de plancher ;
- une paroi de collier (2) délimitant extérieurement le plancher (1), la paroi de collier (2) présentant une pluralité d'orifices, le plancher (1) étant configuré pour être enroulé autour d'un tronc d'arbre en formant une entretoise entre le tronc et la paroi de collier (2).

Selon l'invention, le dispositif d'adaptation et de fixation comprend :
- un flasque (7) sur une face radialement intérieure du dispositif, le flasque (7) étant prévu pour être positionné contre le tronc d'arbre et présentant un bord supérieur et un bord inférieur ;
- au moins un guide supérieur (3) s'étendant radialement vers l'extérieur depuis le bord supérieur du flasque (7), et au moins un guide inférieur (5) s'étendant radialement vers l'extérieur depuis le bord inférieur du flasque (7) sensiblement parallèlement au guide supérieur (3),
les guides supérieur et inférieur (3, 5) étant configurés pour recevoir entre eux les deux extrémités du plancher (1) chevauchées l'une sur l'autre, de sorte que les extrémités du plancher (1) coulissent le long des guides supérieur et inférieur (3, 5) si elles sont éloignées l'une de l'autre ;
- des moyens élastiques de liaison (4) sur une face radialement extérieure du dispositif, les moyens élastiques de liaison (4) s'étendant depuis une première extrémité de liaison fixée au guide supérieur (3) ou au guide inférieur (5), vers une deuxième extrémité de liaison configurée pour être fixée sur un orifice de la paroi de collier (2).

## Description

La présente invention entre dans le domaine des pièges à chenilles, et plus particulièrement des pièges à chenilles processionnaires du pin.

Les pièges à chenille processionnaire du pin se composent d'un collier faisant le tour de l'arbre dans le but de bloquer la descente des chenilles vers le sol. Ce collier comprend trois parties : un plancher de cheminement 1, un garde-fou 2, percé régulièrement de trous, et un système de fixation.

La présente invention est un système de fixation et de croissance du collier du piège à chenille processionnaire du pin.

La croissance de l'arbre fait que le tronc augmente son diamètre en moyenne de 1 cm par an et sa circonférence d'environ 3 cm.

Les pièges à chenilles processionnaires du pin de l'état de la technique, une fois installés sur l'arbre, ont un diamètre verrouillé par un système d'attache. La croissance de l'arbre exerce une pression sur celui-ci et vient écraser le plancher du collier contre le tronc, rapprochant ainsi le garde-fou de l'arbre ce qui peut permettre aux chenilles de passer au-dessus et d'éviter le piège, le rendant inefficace.

D'après l'invention telle qu'ici décrite, une fonction de l'organe de croissance et de fixation est de permettre au collier de suivre la croissance de l'arbre sans se déformer, de garder son intégrité mécanique, tout en le maintenant serré contre le tronc.

Un avantage technique de l'organe de croissance et de fixation selon l'invention est de maintenir les deux extrémités du collier serrées l'une contre l'autre à l'endroit où elle se chevauchent. À l'extérieur du collier, un système de fixation maintient l'ensemble serré contre le tronc. Ledit système de fixation permet aussi au collier de coulisser dans l'organe de croissance, sous la pression de l'arbre.

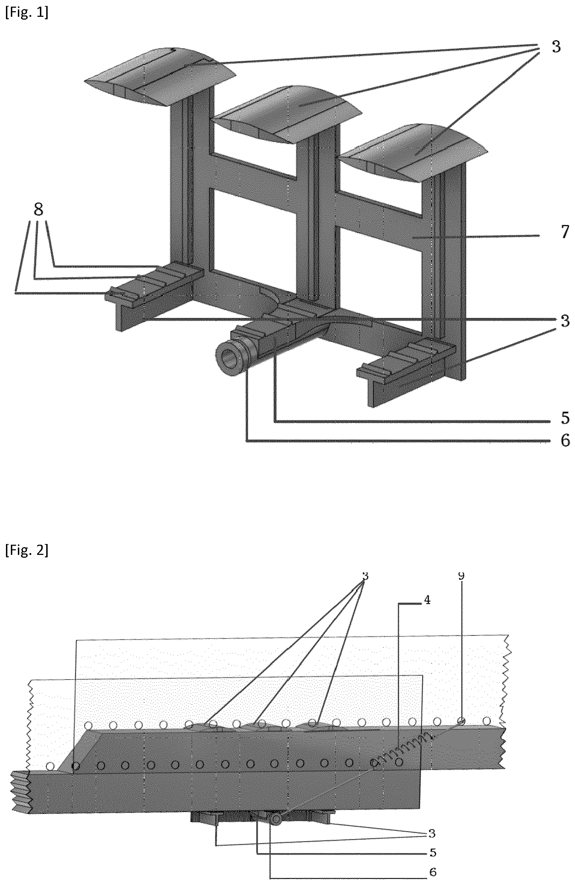

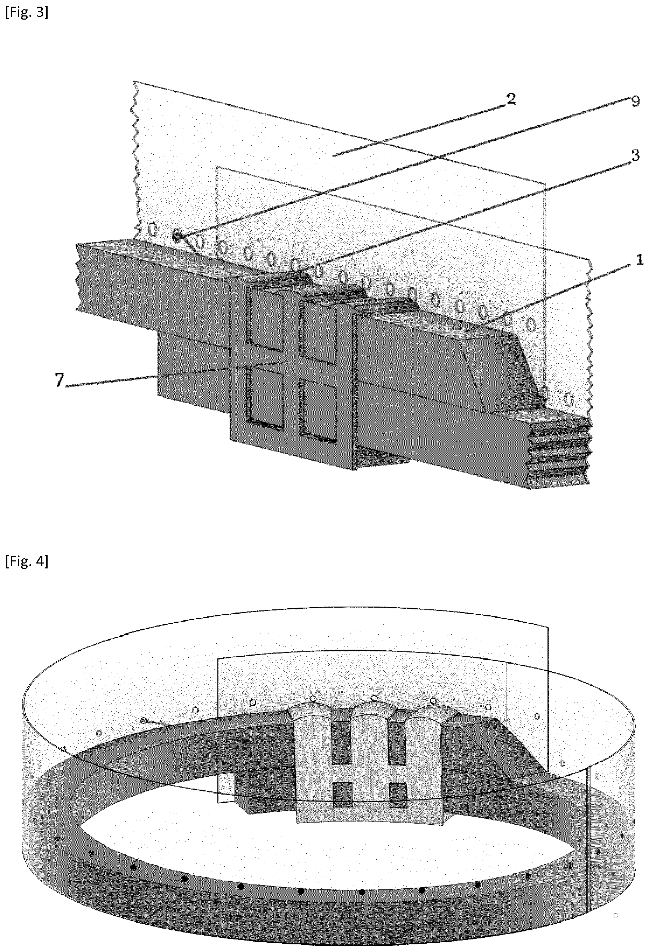

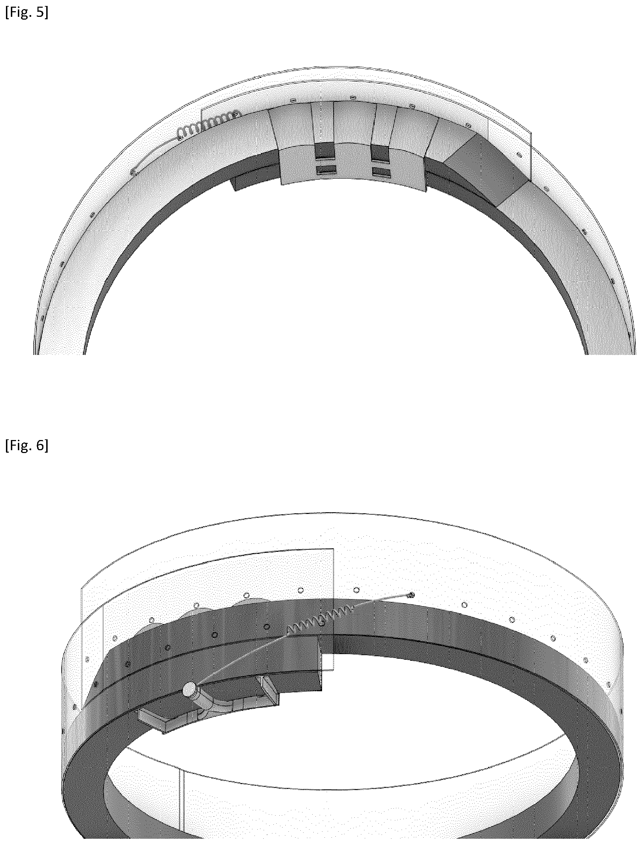

L'organe de croissance et de fixation selon l'exemple de réalisation illustré sur les Figures 1 à 6 annexées comprend :

Un flasque 7 en contact avec le tronc,

Des guides 3 permettant de serrer les deux extrémités du plancher 1 l'une contre l'autre,

Un ressort de fixation 4 permettant de relier et fixer l'organe de croissance et de fixation à une partie du collier. Il permet au collier de coulisser dans l'organe de croissance, sous la pression de l'arbre.

De manière avantageuse, le système de croissance et de fixation comporte deux rangées de trois guides 3 superposés, espacées de deux fois la hauteur du plancher 1 du collier.

De manière avantageuse, la longueur des guides 3 est égale à la largeur du plancher 1, excepté en ce qui concerne le guide central inférieur 5 qui dépasse du plancher de manière à insérer une gorge 6 à son extrémité destinée à recevoir une des deux extrémités du ressort de fixation 4.

De préférence, ce flasque 7 est conçu en matériau semi-rigide assurant une adaptation à la courbure du tronc.

Les guides 3 et 5, plus épais que le flasque, ont un profil leur permettant de garder un angle de quatre-vingt-dix degrés par rapport au flasque 7 et sont de préférence munis de griffes 8 destinées à retenir le plancher 1.

La longueur du collier doit être plus longue que la circonférence du tronc de manière que les extrémités du plancher 1 se chevauchent et viennent se coincer entre les deux rangées de guides 3 de l'organe de croissance. Le collier dépasse de chaque côté de l'organe de croissance et de fixation de plusieurs centimètres pour permettre aux deux extrémités du plancher 1 de coulisser afin que le collier s'adapte à la croissance du tronc.

Un ressort 4 muni d'un crochet à chaque extrémité vient serrer le collier contre le tronc de l'arbre.

Le ressort 4, dont une extrémité vient se loger dans la gorge 6 de l'organe, s'étend ici en diagonale vers la partie supérieure du collier et vient se fixer dans le trou du garde-fou 2 le plus adapté pour serrer l'ensemble sur le tronc.

Les points d'ancrage 6 et 9 du ressort sont pour le premier indépendant du collier, et pour le second solidaire du collier. Ces deux points d'ancrage permettent d'assurer la fonction de coulissement du plancher entre les deux rangées des guides, et donc la fonction d'adaptation à la croissance de l'arbre.

## Revendications

1. Dispositif d'adaptation de diamètre et de fixation pour un collier de piège à chenilles, notamment pour un piège à chenilles processionnaires du pin, le dispositif d'adaptation et de fixation étant prévu pour coopérer avec un piège à chenilles qui comprend :
- un plancher (1) de cheminement des chenilles, le plancher (1) comprenant deux extrémités de plancher ;
- une paroi de collier (2) délimitant extérieurement le plancher (1), la paroi de collier (2) présentant une pluralité d'orifices, le plancher (1) étant configuré pour être enroulé autour d'un tronc d'arbre en formant une entretoise entre le tronc et la paroi de collier (2),
le dispositif d'adaptation et de fixation étant **caractérisé en ce qu'**il comprend :
- un flasque (7) sur une face radialement intérieure du dispositif, le flasque (7) étant prévu pour être positionné contre le tronc d'arbre et présentant un bord supérieur et un bord inférieur ;
- au moins un guide supérieur (3) s'étendant radialement vers l'extérieur depuis le bord supérieur du flasque (7), et au moins un guide inférieur (5) s'étendant radialement vers l'extérieur depuis le bord inférieur du flasque (7) sensiblement parallèlement au guide supérieur (3),
les guides supérieur et inférieur (3, 5) étant configurés pour recevoir entre eux les deux extrémités du plancher (1) chevauchées l'une sur l'autre, de sorte que les extrémités du plancher (1) coulissent le long des guides supérieur et inférieur (3, 5) si elles sont éloignées l'une de l'autre ;
- des moyens élastiques de liaison (4) sur une face radialement extérieure du dispositif, les moyens élastiques de liaison (4) s'étendant depuis une première extrémité de liaison fixée au guide supérieur (3) ou au guide inférieur (5), vers une deuxième extrémité de liaison configurée pour être fixée sur un orifice de la paroi de collier (2).

2. Dispositif d'adaptation de diamètre et de fixation selon la revendication 1, dans lequel le guide inférieur (5) dépasse radialement du guide supérieur (3), et présente une extrémité externe qui définit une gorge de fixation (6), la première extrémité de liaison étant fixée dans ladite gorge de fixation (6).

3. Dispositif d'adaptation de diamètre et de fixation selon la revendication 2, dans lequel les moyens élastiques de fixation comprennent un ressort (4) qui s'étend en diagonale entre la gorge de fixation (6) et la deuxième extrémité de liaison prévue pour être fixée au-dessus du plancher (1) de cheminement.
